# EUROPÄISCHE PATENTANMELDUNG

(11) **EP 2 902 451 A1**
(43) Veröffentlichungstag der Anmeldung: **05.08.2015**
(21) Anmeldenummer: 14000315.3
(22) Anmeldetag: 29.01.2014
(51) Int. Cl.: C09C 1/62, C09C 1/64

(54) **Verfahren zum Beschichten von Metalleffektpigmenten**

(71) Anmelder: Schlenk Metallic Pigments GmbH, 91154 Roth (DE)
(72) Erfinder: Seidl, Alois, 91154 Roth (DE); Lang, Nina, 91154 Roth (DE); Siko, Heinz, 91154 Roth (DE)
(74) Vertreter: Müller-Boré & Partner Patentanwälte PartG mbB

(57) **Zusammenfassung**

Die vorliegende Erfindung betrifft ein Verfahren zum Beschichten von Metalleffektpigmenten, insbesondere Aluminiumpigmenten, worin mindestens zwei voneinander getrennte Prozesszyklen vorgesehen werden.

## Beschreibung

Die vorliegende Erfindung betrifft ein Verfahren zum Beschichten von Metalleffektpigmenten, insbesondere Aluminiumpigmenten, worin mindestens zwei voneinander getrennte Prozesszyklen vorgesehen werden.

Wässrige Beschichtungszusammensetzungen für Metalleffektpigmente sind seit vielen Jahren bekannt. Die optische Wirkung dieser Effektpigmente beruht auf der Ausrichtung der Plättchen parallel zur Oberfläche des umgebenden Systems, an denen eine gerichtete Reflexion auftritt. Sie werden im Colour Index unter C.I. Pigment Metal gelistet. Metalleffektpigmente werden zur Herstellung von Metalleffekten in Lacken, Drucken, Kunststoffen und Kosmetika eingesetzt. Die größte wirtschaftliche Bedeutung haben Aluminium (C.I. Pigment Metal 1, historisch *Silberbronze*) und Messing (C.I. Pigment Metal 2, *Goldbronze*)*.* Die in der Regel korrosionsempfindlichen Pigmente, insbesondere Aluminiumpigmente, müssen bei wässrigen Beschichtungszusammensetzungen mit einer schützenden Beschichtung versehen werden, um eine Oxidation der Metallpigmente unter Wasserstoffbildung zu vermeiden.

Jede aufgebrachte Schicht enthält eine bestimmte Anzahl an Fehlstellen, welche die Qualität der Beschichtung verschlechtert. Im Falle der Nachbeschichtung von Metalleffektpigmenten mit organischen oder anorganischen Polymeren bedeutet dies, dass der Schutz des Metalls gegen korrosive Einflüsse nicht mehr gewährleistet ist. Dies wirkt sich negativ sowohl auf die optischen Eigenschaften (Verfärbung) als auch die sicherheitstechnischen Eigenschaften (H₂-Entwicklung) aus. Die Stabilität von z.B. beschichteten Aluminiumpigmenten in wasserbasierten Lack- oder Druckfarbensystemen wird durch Mikrorisse und Mikrolöcher in der aufgebrachten Schicht erniedrigt. Vor allem bei besonders aggressiven Wasserlacken kann so Wasserstoffentwicklung durch die Oxidation des Aluminiums beobachtet werden.

Bei der Anwendung von Metallpigmenten im Außenbereich ist es wichtig, witterungsbeständige Pigmente zu erhalten. Diese Witterungseinflüsse, welchen die Pigmente in Lacken für den Außenbereich ausgesetzt sind, werden durch verschiedene Chemikalientests simuliert. Hierbei wird eine Säure oder Base (z.B. 10%ige Salzsäure, 10%ige Natronlauge) auf die ausgehärtete Lackschicht getropft und die Verfärbung dieser Stelle beurteilt. Diese gewünschte Chemikalienstabilität und eine damit einhergehende Witterungsbeständigkeit erhält man durch Beschichtung der Pigmente mit verschiedenen Polymeren. Durch Fehlstellen in der Beschichtung kann die Chemikalie durch die Beschichtung zum Pigment vordringen. So wird das Metall oxidiert, verliert somit seinen metallischen Charakter und verfärbt sich. Diese Farbänderung ist nicht gewünscht.

Das Ziel jeder aufgebrachten Beschichtung besteht insofern darin, die Fehlstellen zu minimieren und somit die Güte der aufgebrachten Beschichtung zu erhöhen.

In Verfahren gemäß dem Stand der Technik erfolgt die Beschichtung in einem einzigen Verfahrensschritt (vgl. US 2008/087187 A1, insbesondere Beispiel 1 b). Entweder wird die komplette Menge der Beschichtungssubstanzen auf einmal zugegeben oder es erfolgt das Zugeben über einen bestimmten Zeitraum. Durch letzteres wird eine langsamere Reaktion der Reagenzien erzwungen und so versucht die Homogenität der Beschichtung zu verbessern. In beiden Fällen wird das Material in einem Verfahrensschritt bzw. Prozesszyklus beschichtet. Das heißt, dass das Material während der Beschichtung nicht aufgearbeitet wird. WO 2011/095341A1 offenbart eine Beschichtung mittels Sol-Gel Verfahren, welches zuerst im Sauren und dann im Basischen durchgeführt wird und dadurch eine verbesserte Beschichtung erreichen soll. Dies erfolgt jedoch auch in einem einzigen Prozessschritt. Auch hier können sich durch die Aufarbeitung der beschichteten Pigmentmischung erneut Mikrorisse bilden.

Somit liegt der vorliegenden Erfindung die Aufgabe zugrunde, ein Verfahren zur Verfügung zu stellen, welches eine hohe Qualität der Beschichtung durch Minimieren der Fehlstellen gewährleistet und somit die Stabilität der Pigmente gegen sehr korrosive Einflüsse schützt.

Diese Aufgabe wird durch die in den Ansprüchen gekennzeichneten Ausführungsformen gelöst.

Insbesondere wird ein Verfahren zum Beschichten von Metalleffektpigmenten in mindestens zwei voneinander getrennten Prozesszyklen bereitgestellt, umfassend die Schritte:
(a) Bereitstellen von Metalleffektpigmenten in einer pastösen Form,
(b) Suspendieren der Metalleffektpigmentpaste in einem organischen oder wässrigen Lösemittel als Flüssigphase,
(c) Beschichten der in Schritt (b) suspendierten Metalleffektpigmente mit einer ersten anorganischen oder organischen Korrosionsschutzschicht,
(d) Abtrennen und Isolieren der in Schritt (c) beschichteten Metalleffektpigmente,
(e) Verarbeiten der in Schritt (d) abgetrennten Metalleffektpigmente in eine pastöse Form mittels eines organischen oder wässrigen Lösemittels als Flüssigphase,
(f) wiederum Suspendieren der Metalleffektpigmentpaste von Schritt (e) in einem organischen oder wässrigen Lösemittel als Flüssigphase, wobei das Lösemittel identisch oder unterschiedlich zu dem in Schritt (b) eingesetzten Lösemittel ist.
(g) abermaliges Beschichten der in Schritt (f) suspendierten Metalleffektpigmente mit einer zweiten anorganischen oder organischen Korrosionsschutzschicht, wobei das Material der zweiten Korrosionsschutzschicht gleich oder verschieden von dem Material der ersten Korrosionsschutzschicht von Schritt (c) ist, und
(h) Abtrennen der in Schritt (g) derart beschichteten Metalleffektpigmente,
   sowie
(i) gegebenenfalls ein Wiederholen der Schritte (e), (f), (g) und (h), ausgehend von den in Schritt (h) erhaltenen Metalleffektpigmenten.

Erfindungsgemäß erfolgt das Aufbringen eines Materials in mehreren, d.h. mindestens zwei, Schichten statt in einer Schicht. Das erfindungsgemäße Verfahren sieht das Durchführen von mindestens zwei voneinander getrennten Prozesszyklen vor, d.h. weder wird die komplette Menge des Materials der Korrosionsschutzschicht auf einmal zugegeben, noch erfolgt das Zugeben über einen bestimmten Zeitraum. Unter einem Prozesszyklus wird im Rahmen der vorliegenden Erfindung das Suspendieren, Beschichten und anschließende Abtrennen/Isolieren der Metalleffektpigmente verstanden.

Die bei der ersten Beschichtung entstehenden Fehlstellen werden durch eine zweite Schicht geschlossen. Die Fehlstellen einer Beschichtung treten mit einer sehr geringen Wahrscheinlichkeit immer an derselben Stelle auf. Dies ist auch bei während der Aufarbeitung entstehenden Mikrorissen der Fall. Die Risse treten in den unterschiedlichen Schichten an unterschiedlichen Stellen auf.

Im Rahmen der vorliegenden Erfindung werden als Metalleffektpigmente vorzugsweise Aluminiumpigmente eingesetzt. Es können aber auch andere Metalleffektpigmente, wie z.B. Messingpigmente oder Perlglanzpigmente, zum Einsatz kommen.

Wenn die Korrosionsschutzschicht anorganischer Natur ist, enthält die anorganische Korrosionsschutzschicht des Metallpigmentes vorzugsweise Oxide und/oder Hydroxide aus der Gruppe, die aus Silizium, Zirkonium, Aluminium, Chrom, Vanadium, Molybdän, Bor und/oder Mischungen derselben besteht. Vorzugsweise ist das Material der zweiten anorganischen Korrosionsschutzschicht gleich dem Material der ersten anorganischen Korrosionsschutzschicht.

Wenn die Korrosionsschutzschicht organischer Natur ist, enthält die organische Korrosionsschutzschicht des Metallpigmentes vorzugsweise Acrylat- oder Epoxidharze. Vorzugsweise ist das Material der zweiten organischen Korrosionsschutzschicht gleich dem Material der ersten organischen Korrosionsschutzschicht.

Der Anteil der Korrosionsschutzschicht beträgt vorzugsweise weniger als 20 Gew.-%, bezogen auf das Gesamtgewicht der mit der Korrosionsschutzschicht versehenen Metallpigmente. Bevorzugt ist eine Korrosionsschutzschicht aus Siliziumdioxid, welche nach Sol-Gel-Verfahren auf die Metallpigmente aufgebracht wird. Dabei werden vorzugsweise Tetraalkoxysilane, z.B Tetramethoxysilan oder Tetraethoxysilan, oder Tetrahalogensilane, z.B. Tetrachlorsilan, als SiO₂-Precursor eingesetzt. Tetraethoxysilan ist bevorzugt.

Weiterhin bevorzugt ist die Siliziumdioxid-Oberfläche mit organofunktionellen Silanen belegt. Eine Oberflächenmodifizierung mit organofunktionellen Silanen verleiht dem Effektpigment gute und steuerbare Benetzungseigenschaften zu Bindemitteln. Dies erlaubt die Einbindung oder Einbettung der äusserst dünnen Metallpigmente in eine Lack- oder Farbschicht. Neben der die Metallpigmente umhüllenden Korrosionsschutzschicht wird über die Einbettung in die Lack- oder Farbschicht ein weiterer Korrosionsschutz der Metallpigmente erreicht. Die auf der Oberfläche der SiO₂-Schicht aufgebrachten organofunktionellen Gruppen erlauben nämlich eine Umsetzung mit Bindemittelkomponenten und führen zu einer kovalenten Bindung der Metallpigmente in der Lack- oder Farbschicht. Aufgrund der chemischen Fixierung in der Lack- bzw. Farbschicht ist es teilweise nicht mehr erforderlich, eine weitere Schutzschicht, beispielsweise eine Klarlackschicht, aufzubringen.

Die Menge an SiO₂, die für eine vollständige Umhüllung des Aluminiumpigmentes verwendet wird, um Gasungsstabilität zu erlangen, sollte möglichst niedrig sein. Hohe SiO₂-Mengen verringern die Deckkraft des Effektpigmentes und können die optischen Eigenschaften nachteilig beeinflussen. Die Menge an SiO₂ der beschichteten Metallpigmente, insbesondere Aluminiumpigmente, liegt vorzugsweise in einem Bereich von 2 bis 20 Gew-%, bevorzugt von 3 bis 15 Gew-% und besonders bevorzugt von 4 bis 10 Gew-%, jeweils bezogen auf das Gewicht des gesamten Effektpigmentes in trockener Form. Abhängig von der spezifischen Oberfläche des Metallpigmentes ergeben sich für diese Gehalte an SiO₂ üblicherweise Schichtdicken der SiO₂-Schicht von 3 bis 200 nm in Abhängigkeit von der Oberfläche des beschichteten Pigments.

Zur Erreichung hoch glänzender Coatings mit dem optischen Effekt eines im Wesentlichen strukturlosen, vorzugsweise strukturlosen, geschlossenen Flüssigmetallfilmes ist es unerlässlich, sehr dünne Metallpigmente zu verwenden. Die mittlere Schichtdicke der mit einer Korrosionsschutzschicht versehenen Metallpigmente beträgt im Mittel weniger als 160 nm, vorzugsweise 30 bis 160 nm, weiter bevorzugt 60 bis 140 nm, besonders bevorzugt 70 bis 120 nm und ganz besonders bevorzugt 75 bis 90 nm. Diese Angaben entsprechen annähernd VMPs (vacuum metallized pigments) oder sehr dünnen Pigmenten. Unterhalb von 50 nm Gesamtschichtdicke sind die Metallpigmente derart dünn, dass sie bereits ihre optische Opazität verlieren können, d.h. ihre Deckkraft nimmt in erheblichem Masse ab. Hierbei ist zu beachten, dass die Schichtdicke der Korrosionsschutzschicht zweimal in die Gesamtschichtdicke des Pigmentes eingeht. So beträgt beispielsweise bei einer Schichtdicke von SiO₂ von 20 nm und einer Gesamtschichtdicke des beschichteten Pigmentes von 160 nm die Schichtdicke des reinen Aluminiumpigmentes 120 nm.

Die vorliegende Erfindung ist aber auch auf dickere Silberdollarpigmente, d.h. auf solche mit einer Dicke von 800 bis 900 nm anwendbar.

Die Schichtdicke der Metall- bzw. Aluminiumpigmente ohne aufgebrachte Korrosionsschicht liegt vorzugsweise in einem Bereich von 30 nm bis 150 nm, weiter bevorzugt von 50 nm bis 140 nm, noch weiter bevorzugt von 60 nm bis 120 nm. Als sehr geeignet hat sich eine Schichtdicke von 70 bis 100 nm erwiesen.

Vorzugsweise ist das als Flüssigphase eingesetzte organische Lösemittel aus Alkoholen, Ketonen; Estern oder Ethern, insbesondere Alkoholen, vorzugsweise Isopropanol, ausgewählt, wobei in Schritt (e) zum Verarbeiten in eine pastöse Form das gleiche organische Lösemittel eingesetzt wird, in welchem in Schritt (f) das Suspendieren erfolgt. Neben organischen Lösemittel können aber auch wässrige Lösemittel bzw. wässrige-organische Gemische in jeglichem Mischungsverhältnis eingesetzt werden.

Das erfindungsgemäße Beschichtungsverfahren wurde beispielhaft anhand der Beschichtung von Aluminiumpigmenten (Alucar 2650 von Schlenk Metallic Pigments) mit SiO₂ untersucht. Das erfindungsgemäße Beschichtungsverfahren lässt sich jedoch ohne weiteres auf Messingeffektpigmente oder Perlglanzpigmente o.ä. übertragen. Neben SiO₂ können auch andere anorganische Beschichtungsmaterialien eingesetzt werden.

In einer Versuchsreihe wurde die Menge an SiO₂ in zwei bzw. drei Schritten zugegeben, ohne dass das Reaktionsgemisch vorher aufgearbeitet wurde, d.h. nicht gemäß der vorliegenden Erfindung. In der zweiten Versuchsreihe wurde erst ein Teil der SiO₂-Schicht aufgebracht und dann der Ansatz aufgearbeitet. Der letzte Schritt beinhaltet das Abfiltrieren und das Herstellen einer 60%igen Isopropanolpaste, als welche das Produkt auch für wässrige Anwendungen vertrieben werden kann. Diese Paste wird im Anschluss als Startmaterial für den nächsten Beschichtungsprozess eingesetzt. Wenn die Paste ca. 40% oder mehr Lösemittel enthält, erscheint die Paste optisch vielmehr pulverartig zu sein. Üblicherweise enthält die Paste 40 bis 80 Gew.-% Feststoffanteile, vorzugsweise 55 bis 70 Gew.-%.

Gemäß der vorliegenden Erfindung werden anstatt einer dicken Schicht somit zwei oder mehrere dünne Schichten aufeinander abgeschieden. Die Gesamtmenge an SiO₂ wird gleich gehalten, unabhängig von der Anzahl der Schichten, die aufgebracht werden. Bei einer einfachen Schicht wurde ein SiO₂-Massenanteil von 10%, bezogen auf Gewicht beschichtetes Aluminiumpigment (SiO₂/SiO₂ + Al) gewählt. So wurde bei einer Zweifachbeschichtung im ersten Schritt 5% des SiO₂ und im zweiten Schritt die weiteren 5% aufgebracht. Analog erfolgt die Beschichtung in einem dreifachen Prozess (drei Prozesszyklen) in Schichten zu je 3,3%. Die Oberfläche wurde anschließend nicht weiter mit oberflächenaktiven Reagenzien wie Silanen oder phosphororganischen Reagenzien modifiziert, da dies v.a. bei hydrophobierenden Reagenzien die anschließenden Gasungstests verfälschen könnte.

Detektiert wird die Verbesserung der Beschichtung durch die Minimierung der Fehlstellen mit Hilfe der Wasserstoffentwicklung in Kombination mit Fe₂O₃-rot Pigmenten. Dies ist der kritischste Gasungstabilitätstest, da in der Gegenwart von Fe₂O₃-rot Pigmenten die Oxidation des Aluminiums und somit die Bildung von Wasserstoff verstärkt wird. Eisenionen scheinen schon durch kleine Fehlstellen einer solchen SiO₂-Schicht zum Aluminium vordringen zu können und dann die Oxidation des Aluminiums zu bewirken. Eine Möglichkeit, die Oxidation auch bei einer schlechten Beschichtung zu verhindern, besteht darin, die Fe-Ionen durch Einsatz verschiedener Additive zu komplexieren. Aus diesem Grund wurde, wie bereits erwähnt, auf eine Modifizierung der Oberfläche mit verschiedenen funktionellen Gruppen verzichtet. Eine Möglichkeit, die Oxidation auch bei einer schlechten Beschichtung zu verhindern, besteht darin, die Fe-Ionen durch Einsatz verschiedener Additive zu komplexieren. Aus diesem Grunde wurde, wie bereits erwähnt, auf eine Modifizierung der Oberfläche mit verschiedenen funktionellen Gruppen verzichtet.

Bei den Versuchen hat sich gezeigt, dass durch die erfindungsgemäße Vorgehensweise, die SiO₂-Schicht in mindestens zwei Schichten aufzutragen, die Wasserstoffentwicklung in Kombination mit Fe₂O₃-rot minimiert werden kann. Dies hat den Vorteil, dass man unabhängig von Additiven zur Unterdrückung der H₂-Entwicklung ist, da Additive immer Unverträglichkeiten mit einem bestimmten Lacksystem hervorrufen können. Weiterhin hat sich in den Versuchen gezeigt, dass es nicht genügt, die Tetraethoxysilan-Menge in zwei Portionen mit einem zeitlichen Abstand zuzugeben, sondern dass zwei unabhängige Prozessschritte nötig sind (siehe Versuch WT344).

### Beispiel 1 (Versuchsnummer WT351):

153 g Aluminiumpigmentpaste Alucar 2650 der Firma Schlenk Metallic Pigments werden in 250 g Isopropanol suspendiert. Zu dieser Mischung gibt man 19,1 g Tetraethoxysilan und erwärmt diese Mischung auf 60°C. Dann werden 100 g Wasser und sofort im Anschluss 8 g Ammoniak (25%ig in Wasser) zugegeben und die Mischung für weitere 2 h gerührt. Danach wird die Mischung über eine Glasfritte abfiltriert und mit Isopropanol auf einen Festkörper von 60% eingestellt. Diese Paste wird im Anschluss erneut beschichtet. Hierzu werden 150 g der erhaltenen Paste erneut in 200 g Isopropanol suspendiert und mit 17,3 g Tetraethoxysilan versetzt und die Mischung auf 60°C erwärmt. Nach Erreichen dieser Temperatur gibt man 80 g Wasser und 6 g Ammoniak zu und rührt die Mischung erneut für 2 h. Im Anschluss wird die Mischung abfiltriert und der erhaltene Filterkuchen mit Isopropanol auf 60% eingestellt. Die anschließenden Prüfungen wurden mit der nun erhaltenen Paste durchgeführt.

### Beispiel 2 (Versuchsnummer WT360):

153 g Aluminiumpigmentpaste Alucar 2650 der Firma Schlenk Metallic Pigments werden in 200 g Isopropanol suspendiert. Zu dieser Mischung gibt man 12,5 g Tetraethoxysilan und erwärmt diese Mischung auf 60°C. Dann werden 80 g Wasser und sofort im Anschluss 6 g Ammoniak zugegeben und die Mischung für weitere 2 h gerührt. Danach wird die Mischung über eine Glasfritte abfiltriert und mit Isopropanol auf einen Festkörper von 60% eingestellt. Diese Paste wird im Anschluss erneut beschichtet. Hierzu werden 150 g der Paste in 200 g Isopropanol suspendiert und mit 10,7 g Tetraethoxysilan versetzt und die Mischung auf 60°C erwärmt. Nach Erreichen dieser Temperatur gibt man 80 g Wasser und 6 g Ammoniak zu und rührt die Mischung für 2h. Am Anschluss wird die Mischung abfiltriert und der erhaltene Filterkuchen mit Isopropanol auf 60% eingestellt. Diese Paste wird im Anschluss nun ein drittes Mal beschichtet. Hierzu werden 100 g der Paste in 150 g Isopropanol suspendiert und mit 7,6 g Tetraethoxysilan versetzt und die Mischung auf 60°C erwärmt. Nach Erreichen dieser Temperatur gibt man 60 g Wasser und 4 g Ammoniak zu und rührt die Mischung für 2 h. Am Anschluss wird die Mischung abfiltriert und der erhaltene Filterkuchen mit Isopropanol auf 60% eingestellt. Dies Die anschließenden Prüfungen wurden mit der erhaltenen Paste durchgeführt.

### Vergleichsbeispiel A (Versuchsnummer WT348):

153 g Aluminiumpigmentpaste Alucar 2650 der Firma Schlenk Metallic Pigments werden in 300 g Isopropanol suspendiert. Zu dieser Mischung gibt man 43,3 g Tetraethoxysilan und erwärmt diese Mischung auf 60°C. Dann werden 100 g Wasser und sofort im Anschluss 6 g Ammoniak zugegeben und die Mischung für weitere 4h gerührt. Danach lässt man die Mischung abkühlen und filtriert über eine Glasfritte ab. Anschließend wird der Festkörper der Paste mit Isopropanol auf 60% eingestellt. Die anschließenden Prüfungen wurden mit der erhaltenen Paste durchgeführt.

### Vergleichsbeispiel B (Versuchsnummer WT344):

153 g Aluminiumpigmentpaste Alucar 2650 der Firma Schlenk Metallic Pigments werden in 250 g Isopropanol suspendiert. Zu dieser Mischung gibt man 19,1 g Tetraethoxysilan und erwärmt diese Mischung auf 60°C. Dann werden 100 g Wasser und sofort im Anschluss 8 g Ammoniak (25%ig in Wasser) zugegeben und die Mischung für weitere 2h gerührt. Dann gibt man erneut 250 g Isopropanol und 19,1 g Tetraethoxysilan gefolgt von 80 g Wasser und 6 g Ammoniak zu und rührt die Mischung erneut für 2 h. Im Anschluss wird die Mischung abfiltriert und der erhaltene Filterkuchen mit Isopropanol auf 60% eingestellt. Die anschließenden Prüfungen wurden mit der nun erhaltenen Paste durchgeführt.

Die Ergebnisse sind in der folgenden Tabelle dargestellt. Es wurden mehrere Versuche nach der analogen Vorgehensweise der Beispiele durchgeführt, um eine Reproduzierbarkeit der Ergebnisse zu erhalten.

| Anzahl aufgebrachter Schichten SiO₂ | Versuchsnummer | SiO₂ [%] | Standard Fe₂O₃-Gasungstest | D10 [µm] | D50 [µm] | D90 [µm] | span |
|---|---|---|---|---|---|---|---|
| 2 (aber ein Prozessschritt) | WT344 | 10 | 100 mL | 11,09 | 20,78 | 34,18 | 1,11 |
| 1 | WT348 | 10 | 100 mL | 8,96 | 18,37 | 31,44 | 1,22 |
| 2 | WT351 | 10 | 12 mL | 8,93 | 18,34 | 30,83 | 1,2 |
| 2 | WT352 | 10 | 12 mL | 9,14 | 18,58 | 31,29 | 1,19 |
| 2 | WT377 | 10 | 2 mL | 8,62 | 17,95 | 29,96 | 1,19 |
| 3 | WT360 | 10 | 8 mL | 8,59 | 17,84 | 29,94 | 1,2 |
| 3 | WT364 | 10 | 2 mL | 8,54 | 17,86 | 30,09 | 1,21 |
| 3 | WT370/1 | 10 | 10 mL | 8,51 | 17,88 | 29,79 | 1,19 |
| 3 | WT370/2 | 10 | 10 mL | 8,44 | 17,78 | 29,75 | 1,2 |
| 3 | WT375 | 10 | 20 mL | 8,35 | 17,7 | 29,81 | 1,21 |

Aus den vorstehenden PSD-(particle size distribution) Werten (span, D10, D50 und D90), insbesondere den D50 Werten wird ersichtlich, dass bei zwei oder mehr, erfindungsgemäß aufgebrachten Schichten die D50 Werte geringer werden, was für eine niedrigere Agglomerisation bei der Beschichtung bzw. kompaktere Schichten spricht.

## Patentansprüche

1. Verfahren zum Beschichten von Metalleffektpigmenten in mindestens zwei voneinander getrennten Prozesszyklen bereitgestellt, umfassend die Schritte:
(a) Bereitstellen von Metalleffektpigmenten in einer pastösen Form,
(b) Suspendieren der Metalleffektpigmentpaste in einem organischen oder wässrigen Lösemittel als Flüssigphase,
(c) Beschichten der in Schritt (b) suspendierten Metalleffektpigmente mit einer ersten anorganischen oder organischen Korrosionsschutzschicht,
(d) Abtrennen und Isolieren der in Schritt (c) beschichteten Metalleffektpigmente,
(e) Verarbeiten der in Schritt (d) abgetrennten Metalleffektpigmente in eine pastöse Form mittels eines organischen oder wässrigen Lösemittels als Flüssigphase,
(f) wiederum Suspendieren der Metalleffektpigmentpaste von Schritt (e) in einem organischen oder wässrigen Lösemittel als Flüssigphase, wobei das Lösemittel identisch oder unterschiedlich zu dem in Schritt (b) eingesetzten Lösemittel ist.
(g) abermaliges Beschichten der in Schritt (f) suspendierten Metalleffektpigmente mit einer zweiten anorganischen oder organischen Korrosionsschutzschicht, wobei das Material der zweiten Korrosionsschutzschicht gleich oder verschieden von dem Material der ersten Korrosionsschutzschicht von Schritt (c) ist, und
(h) Abtrennen der in Schritt (g) derart beschichteten Metalleffektpigmente,
sowie
(i) gegebenenfalls ein Wiederholen der Schritte (e), (f), (g) und (h), ausgehend von den in Schritt (h) erhaltenen Metalleffektpigmenten.

2. Verfahren gemäß Anspruch 1, wobei die Metalleffektpigmente Aluminiumpigmente sind.

3. Verfahren gemäß Anspruch 1 oder 2, wobei die Metalleffektpigmente in Schritt (c) mit einer SiO₂-Schicht unter Verwendung eines Sol-Gel-Verfahrens beschichtet werden.

4. Verfahren gemäß Anspruch 3, wobei im Sol-Gel-Verfahren als SiO₂-Precursor Tetraalkoxysilane oder Tetrahalogensilane, vorzugsweise Tetraethoxysilan, eingesetzt wird.

5. Verfahren gemäß einem der Ansprüche 1 bis 4, wobei das als Flüssigphase eingesetzte organische Lösemittel aus Alkoholen, Ketonen; Estern oder Ethern, insbesondere Alkoholen, vorzugsweise Isopropanol, ausgewählt ist.

6. Verfahren gemäß einem der Ansprüche 1 bis 5, wobei in Schritt (e) zum Verarbeiten in eine pastöse Form das gleiche organische Lösemittel eingesetzt wird, in welchem in Schritt (f) das Suspendieren erfolgt.

7. Verfahren gemäß einem der Ansprüche 1 bis 6, wobei das Material der zweiten anorganischen Korrosionsschutzschicht gleich dem Material der ersten anorganischen Korrosionsschutzschicht ist.
